# EUROPÄISCHE PATENTSCHRIFT

(11) **EP 1 600 332 B1**
(45) Veröffentlichungstag und Bekanntmachung des Hinweises auf die Patenterteilung: **06.09.2006**
(21) Anmeldenummer: 05103628.3
(22) Anmeldetag: 02.05.2005
(51) Int. Cl.: B60R 11/02

(54) **Befestigungseinrichtung**
Fixing device
Dispositif de fixation

(30) Priorität: 28.05.2004 DE 102004026715; 08.11.2004 DE 102004053793
(43) Veröffentlichungstag der Anmeldung: 30.11.2005
(73) Patentinhaber: SIEMENS AKTIENGESELLSCHAFT, 80333 München (DE)
(72) Erfinder: Pfandler, Georg, 92421, Schwandorf (DE); Schüling, Remigius, 93138, Lappersdorf (DE)

(56) Entgegenhaltungen:
- EP-A- 0 304 598
- EP-A- 0 639 480
- DE-A1- 3 706 979
- DE-A1- 4 334 193
- DE-U1- 8 217 343
- US-A1- 2003 160 134

## Beschreibung

Die Erfindung bezieht sich auf eine Befestigungseinrichtung eines Einbaugerätes in einer Aufnahmeöffnung in einem Kraftfahrzeug, mit wenigstens einer an einer Seitenwand eines Gehäuses des Einbaugerätes anbringbaren Haltefeder, die wenigstens teilweise quer zur Einbaurichtung des Einbaugerätes von dem Gehäuse hervorsteht und in Richtung auf das Gehäuse nachgiebig ist und entlang der Einbaurichtung des Einbaugerätes an einer von mehreren Positionen an der Seitenwand arretierbar ist.

Bei einer derartigen Befestigungseinrichtung ist es bekannt die Haltefeder in der passenden Position an dem Gehäuse festzuschrauben. Dies erfordert außer separaten Befestigungsmitteln einen erheblichen Montageaufwand. Eine derartige Befestigungseinrichtung ist aus der US 2003/160134A gemäß der Oberbegriff des Anspruchs 1 bekannt.

Aufgabe der Erfindung ist es daher eine Befestigungseinrichtung der eingangs genannten Art zu schaffen, die einfach aufgebaut ist und mit geringem Montageaufwand montierbar ist.

Diese Aufgabe wird erfindungsgemäß dadurch gelöst, dass die Seitenwand mindestens eine Reihe von mehreren in Einbaurichtung des Einbaugerätes hintereinander angeordneten Arretieröffnungen gleichen Querschnitts besitzt und die Haltefeder mindestens einen in die Arretieröffnungen einrastbaren Rastansatz aufweist.

Durch die Reihe von Arretieröffnungen wird ein rasterartiges Verschieben der Haltefeder in die jeweils gewünschte Verrastungstiefe des Gehäuses in der Aufnahmeöffnung ermöglicht.

Damit kann eine individuelle Anpassung der gewünschten Verrastungstiefe erfolgen, nachdem das Einbaugerät bereits komplett zusammengebaut wurde.

Eine Entscheidung für welchen Anwendungsfall wie z. B. welches Fahrzeug das Einbaugerät verwendet werden soll, erfolgt erst nach vollständigem Zusammenbau des Einbaugerätes.

Unterschiedliche Gehäuse entsprechend jeweils der geforderten Verrastungstiefe sind nicht erforderlich.

Zur weiteren Montageerleichterung kann die Seitenwand wenigstens eine sich in Einbaurichtung des Einbaugerätes erstreckende schlitzartige Durchführöffnung sowie wenigstens einen sich in Einbaurichtung des Einbaugerätes erstreckenden, mit einem Ende mit der Haltefeder verbundenen Federarm aufweisen, der durch die Durchführöffnung hindurchführbar und mit seinem freien Endbereich unter Vorspannung an der Seitenwand anlegbar ist.

Damit wird die Haltefeder auf einfache Weise in ihrer Montageposition gehalten und erleichtert so den Einbau des Einbaugerätes in die Aufnahmeöffnung.

Ein sicheres Beibehalten des Eingriffs der Rastansätze in die Arretieröffnungen zweier Reihen wird dadurch erreicht, dass die schlitzartige Durchführöffnung zwischen den Erstreckungsrichtungen von zwei Reihen Arretieröffnungen angeordnet ist, da die Kraftbeaufschlagung durch die Haltefeder mittig zwischen den beiden Reihen Arretieröffnungen erfolgt.

Insbesondere eine weitere Reihe Arretieröffnungen kann sich etwa in Fortsetzung der schlitzartigen Durchführöffnung erstrecken.

Eine einfache und keine besonderen Befestigungselemente benötigende Ausbildung der Befestigungseinrichtung besteht darin, dass die Seitenwand wenigstens eine sich entgegen der Einbaurichtung frei erstreckende Zunge aufweist, in der die Arretieröffnungen ausgebildet sind und auf die in Einbaurichtung ein schuhartiges Befestigungsteil der Haltefeder aufschiebbar ist. Nur durch ein Aufstecken der Haltefeder auf die Zunge ist eine vollständige Montage erreicht. Der Platzbedarf für die Befestigungseinrichtung ist minimal, so daß zusätzliche elektromechanische Baugruppen an den Seitenwänden fixiert werden können. Weiterhin sind dieselben Haltefedern an beiden Seiten des Einbaugeräts anordenbar.

Dabei kann das schuhartige Befestigungsteil eine sich in Einbaurichtung erstreckende Aufnahmeöffnung aufweisen, deren Querschnitt etwa dem Querschnitt der Zunge entspricht.

In einfacher Ausbildung kann dazu die Aufnahmeöffnung die Durchgangsöffnung in einem den in Einbaurichtung gerichteten Endbereich des Befestigungsteils und die Zunge umgreifenden ösenartig Bauteil sein, das besonders einfach als Stanz-/Biegeteil herstellbar ist, wenn das ösenartige Bauteil einen etwa C-förmigen Querschnitt besitzt.

Der Rastansatz kann ein sich etwa entgegen der Einbaurichtung erstreckender, zur Zunge hin geneigter Rastarm ist.

Ist der Rastarm eine Ausklinkung des Endbereichs des Befestigungsteils so kann er einteilig mit dem Befestigungsteil ausgebildet sein.

Zur sicheren Arretierung des Einbaugeräts in der Aufnahmeöffnung besitzt die Haltefeder vorzugsweise einen oder mehrere entgegen der Einbaurichtung des Einbaugerätes in einem flachen Winkel von der Seitenwand weggerichtete Klemmhaken, die sich widerhakenartig an die Innenwand der Aufnahmeöffnung anlegen.

Zur Bewegbarkeit der Klemmhaken quer zur Einbaurichtung des Einbaugeräts und zur sicheren Anlage mit einer Mindestkraft an der Innenwand der Aufnahmeöffnung sind vorzugsweise die Klemmhaken an den freien Enden von sich entgegen der Einbaurichtung des Einbaugerätes erstreckenden Klemm-Federarmen angeordnet.

Besitzt die Haltefeder an ihrem entgegen der Einbaurichtung des Einbaugerätes gerichteten Ende einen von der Seitenwand insbesondere rechtwinklig wegragenden Anschlag, so gelangt der Anschlag beim Einschieben des Einbaugeräts in die Aufnahmeöffnung nach Erreichen des Sollposition in Anlage an den Mündungsbereich der Aufnahmeöffnung und erleichtert so den Montagevorgang.

Besonders einfach herstellbar und bauteilsparend ist es, wenn die Haltefeder ein Stanz-/Biegeteil aus einen Blech ist, das die Rastansätze und/oder den Federarm und/oder die Klemmhaken und/oder die Klemm-Federarme und/oder die Anschläge aufweist.

Vorzugsweise ist das Einbaugerät ein Multimediagerät, insbesondere ein Radiogerät.

Ein Ausführungsbeispiel der Erfindung ist in der Zeichnung dargestellt und wird im Folgenden näher beschrieben. Es zeigen
- Figur 1: eine Explosionsdarstellung von Seitenwänden eines Gehäuses und Haltefedern

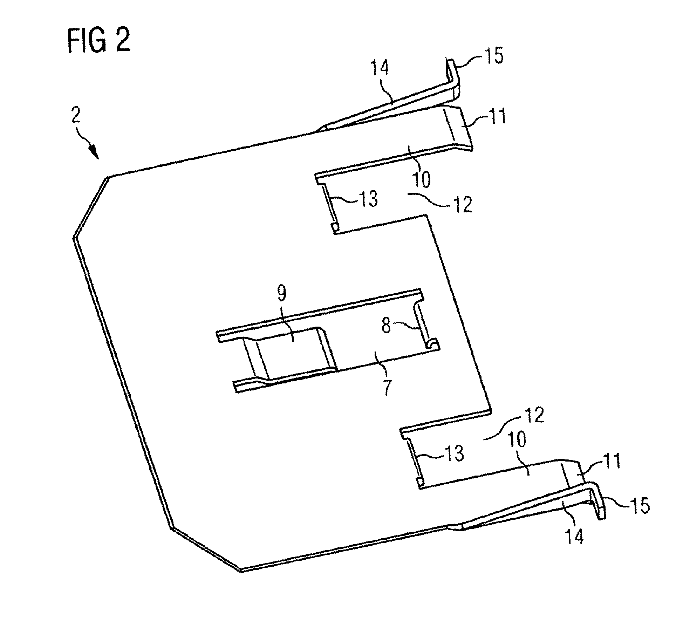

- Figur 2: eine perspektivische Vorderansicht eines ersten Ausführungsbeispiels einer Haltefeder

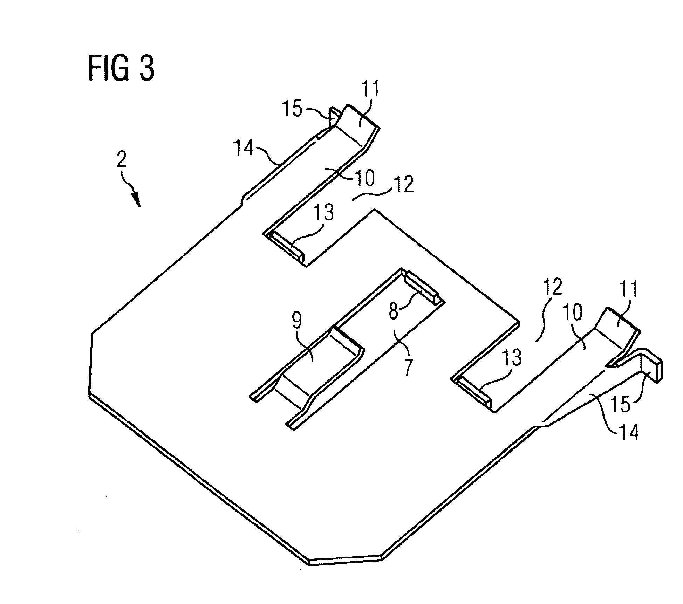

- Figur 3: eine perspektivische Rückansicht der Haltefeder nach Figur 2.

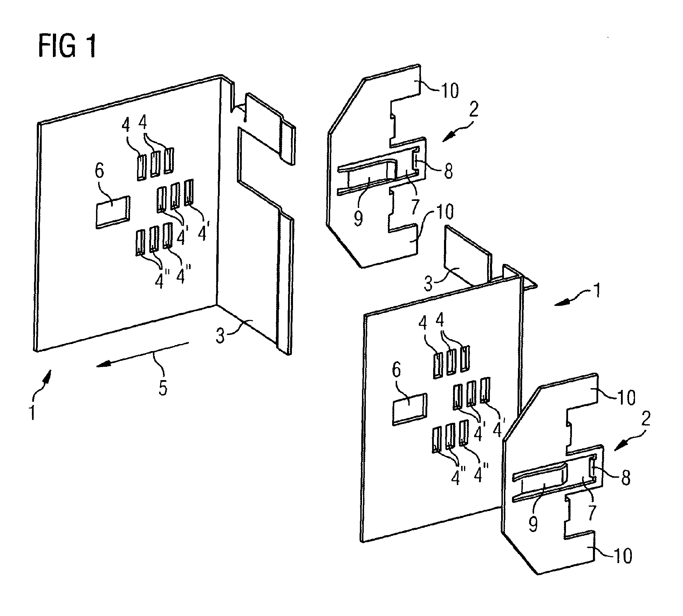

In Figur 1 sind zwei separate Seitenwände eines Gehäuses eines Radiogerätes sowie zwei an den Seitenwänden 1 befestigbare Haltefedern 2 dargestellt.

Rechtwinklig abgebogen besitzen die Seitenwände 1 jeweils Teile 3 einer Frontwand des Gehäuses.

Jede Seitenwand 1 weist parallel zueinander drei Reihen von Arretieröffnungen 4, 4' und 4" auf, wobei sich die Reihen in Einbaurichtung 5 des Radiogeräts in eine nicht dargestellte Aufnahmeöffnung in einer Armaturentafel eines Kraftfahrzeugs erstrecken.

Die äußeren Reihen Arretieröffnungen 4 und 4" sind zueinander ausgerichtet, während die mittlere Reihe Arretieröffnungen 4' gegenüber den Arretieröffnungen 4 und 4" zur Frontwand hin versetzt ist.

Etwa in Fortsetzung zur mittleren Reihe Arretieröffnungen 4' in Einbaurichtung 5 sind in den Seitenwänden 1 schlitzartige Durchführöffnungen 6 ausgebildet, die sich in Einbaurichtung 5 des Radiogeräts erstrecken.

Die Haltefedern 2 sind ein Stanz-/Biegeteil aus Federblech.

In ihrem mittleren Bereich ist eine sich in Einbaurichtung 5 erstreckende etwa rechteckige Ausnehmung 7 ausgestanzt, deren zur Frontwand gerichtete Schmalseite zu einem rechteckigen ersten Rastansatz 8 rechtwinklig aus der Ebene der Haltefeder 2 abgebogen ist.

Von der dieser Schmalseite gegenüberliegenden Schmalseite ragt ein Federarm 9 einer Haltefeder 2 in die Ausnehmung 7. Dieser Federarm 9 ist mit seinem einen Ende einteilig an einer Schmalseite mit der Haltefeder 2 verbunden und im Verlauf seiner freien Erstreckung etwa stufenartig etwa um die Dicke der Seitenwand 2 aus der Ebene der Haltefeder 2 versetzt, um sich dann über etwa 2/3 seiner Länge bis zu seinem freien Ende etwa parallel zur Ebene der Haltefeder 2 zu erstrecken. Dabei befindet sich der versetzte Teil des Federarms 9 auf derselben Seite zur Ebene der Haltefeder 2 wie der erste Rastansatz 8.

Jeweils an den sich in Einbaurichtung 5 erstreckenden Außenseiten besitzt die Haltefeder 2 sich entgegen der Einbaurichtung 5 erstreckende Klemm-Federarme 10, die an ihren freien Enden in einem flachen Winkel nach der gleichen Seite, wie der erste Rastansatz 8, abgebogen sind und Klemmhaken 11 bilden.

In Einbaurichtung 5 ragen innen neben den Klemm-Federarmen 10 rechteckige Ausnehmungen 12 bis zu den Füßen der Klemm-Federarme 10 in die Haltefeder 2. In Höhe des Fußbereichs der Klemm-Federarme 10 sind an den Schmalseiten der Ausnehmungen 12 entsprechend dem ersten Rastansatz 8 zweite Rastansätze 13 rechtwinklig aus der Ebene der Haltefeder 2 abgebogen.

Das Anordnungsmuster der Rastansätze 8 und 13 entspricht immer einem Satz Arretieröffnungen 4, 4' und 4''. Dadurch kann die Haltefeder 2 von der Außenseite her auf die Seitenwand 1 aufgelegt, ihr Federarm 9 durch die Durchführöffnung 6 hindurchgeführt und die Haltefeder 2 entgegen der Einbaurichtung 6 verschoben werden. Dadurch gelangen die Rastansätze 8 und 13 zunächst in die von links ersten Arretieröffnungen 4, 4' und 4".

Soll die Haltefeder 2 weiter zur Frontwand hin positioniert werden, wird sie entgegen der Kraft des Federarms 9 mit ihren Rastansätzen 8 und 13 aus den von links ersten Arretieröffnungen 4, 4' und 4" herausgehoben, um nach weiterem Verschieben der Haltefeder 2 entgegen der Einbaurichtung 5 in die mittleren oder sogar rechten Arretieröffnungen 4, 4', 4'' einzurasten.

An ihren beiden äußeren Randbereichen besitzt die Haltefeder 2 weitere, sich entgegen der Einbaurichtung 5 erstreckende Arme 14, deren freien Enden rechtwinklig von der Haltefeder 2 wegragend abgebogen sind und Anschläge 15 bilden.

Die Haltefeder ist in einem zweiten Ausführungsbeispiel ebenfalls ein Stanz-/Biegeteil aus Federblech. Sie besteht aus einem Blechstreifen, der an seinem einen, entgegen der Einbaurichtung gerichteten Endbereich einen Klemm-Federarm bildet, der an dem freien Ende einen Klemmhaken bildend abgebogen ist.

In Einbaurichtung erstrecken sich zu beiden Seiten des Klemm-Federarms Arme, deren freien Enden rechtwinklig von der Haltefeder wegragend abgebogen sind und Anschläge bilden.

Der in Einbaurichtung gerichtete Endbereich des Blechstreifens ist um ein geringeres Maß stufig abgesetzt und besitzt in Einbaurichtung in einem Abstand hintereinander zwei Rastarme. Diese Rastarme sind als Ausklinkung des Blechstreifens ausgebildet, die mit ihrem in Einbaurichtung gerichteten Ende mit dem Blechstreifen verbunden und mit ihrem freien Erstreckungsbereich von der Ebene des Blechstreifens sich entfernend geneigt sind.

Der abgesetzte Bereich des Blechstreifens besitzt beidseitig seine Breite reduzierende Stufe, die sich in Längserstreckung zwischen den beiden Rastarmen befinden.

Im Bereich der Stufen ist der abgesetzte Bereich des Blechstreifens von einem ösenartigen Bauteil mit C-förmigem Querschnitt umgriffen, wobei die Aufnahmeöffnung des ösenartigen Bauteils breiter ist als die Dicke des Blechstreifens.

Durch das Eingreifen des ösenartigen Bauteils in die Stufe ist das ösenartige Bauteil gegen Verschieben auf dem Blechstreifen gesichert.

In einer Seitenwand eines Gehäuses eines Radiogerätes ist durch Ausstanzen ein sich in Einbaurichtung erstreckender Schlitz ausgebildet, in den entgegen der Einbaurichtung eine Zunge konstanter Breite ragt, auf die zur Befestigung die Haltefeder mit ihrem ösenartigen Bauteil aufschiebbar ist.

In der Zunge sind entsprechend den Rastarmen in Einbaurichtung hintereinander zwei Arretieröffnungen rechteckigen Querschnitts ausgebildet, in die bei Erreichen der Endlage die Rastarme hineinrasten und mit ihrem freien Ende an der entgegen der Einbaurichtung gerichteten Begrenzungswand der Arretieröffnungen in Anlage geraten. Damit wird eine weitere Verschiebung der Haltefeder in Einbaurichtung blockiert. Die Endlage wird bei Anlage des freien Endes der Zunge an der stufigen Absetzung des Blechstreifens erreicht.

Nach einem fertigen Zusammenbau des Gehäuses des Radiogerätes werden in der oben beschriebenen Weise die Haltefedern in der gewünschten Position an den Seitenwänden befestigt und das Gehäuse in die nicht dargestellte Aufnahmeöffnung eingeführt, bis die Anschläge an dem Mündungsbereich der Aufnahmeöffnung zur Anlage gelangen.

Somit bestimmt die Positionierung der Haltefedern an den Seitenwänden die Einbautiefe des Radiogerätes in der Aufnahmeöffnung.
Die Klemmhaken stützen sich mit ihren freien Enden an den Seitenwänden ab, während ihre Abwinklungen federnd in Anlage an den Innenwänden der Aufnahmeöffnung sind und so das Radiogerät in der Aufnahmeöffnung festgeklemmt wird.

## Patentansprüche

1. Befestigungseinrichtung eines Einbaugerätes in einer Aufnahmeöffnung in einem Kraftfahrzeug, mit wenigstens einer an einer Seitenwand eines Gehäuses des Einbaugerätes anbringbaren Haltefeder, die wenigstens teilweise quer zur Einbaurichtung des Einbaugerätes von dem Gehäuse hervorsteht und in Richtung auf das Gehäuse nachgiebig ist und entlang der Einbaurichtung des Einbaugerätes an einer von mehreren Positionen an der Seitenwand arretierbar ist, **dadurch gekennzeichnet, daß** die Seitenwand (1, 1') mindestens eine Reihe von mehreren in Einbaurichtung (5) des Einbaugerätes hintereinander angeordneten Arretieröffnungen (4, 4', 4'', 4''', 4'''') gleichen Querschnitts besitzt und die Haltefeder (2, 2') mindestens einen in die Arretieröffnungen (4, 4', 4'', 4''', 4'''') einrastbaren Rastansatz (8, 13) aufweist.

2. Befestigungseinrichtung nach Anspruch 1, **dadurch gekennzeichnet, daß** die Seitenwand (1) wenigstens eine sich in Einbaurichtung (5) des Einbaugerätes erstreckende schlitzartige Durchführöffnung (6) sowie wenigstens einen sich in Einbaurichtung (5) des Einbaugerätes erstreckenden, mit einem Ende mit der Haltefeder (2) verbundenen Federarm (9) aufweist, der durch die Durchführöffnung (6) hindurchführbar und mit seinem freien Endbereich unter Vorspannung an der Seitenwand (1) anlegbar ist.

3. Befestigungseinrichtung nach einem der vorhergehenden Ansprüche, **dadurch gekennzeichnet, daß** die schlitzartige Durchführöffnung (6) zwischen den Erstreckungsrichtungen von zwei Reihen Arretieröffnungen (4, 4'') angeordnet ist.

4. Befestigungseinrichtung nach einem der vorhergehenden Ansprüche, **dadurch gekennzeichnet, daß** eine Reihe Arretieröffnungen (4') sich etwa in Fortsetzung der schlitzartigen Durchführöffnung (6) erstreckt.

5. Befestigungseinrichtung nach Anspruch 1, **dadurch gekennzeichnet, daß** die Seitenwand (1') wenigstens eine sich entgegen der Einbaurichtung (5) frei erstreckende Zunge (14) aufweist, in der die Arretieröffnungen (4''', 4"") ausgebildet sind und auf die in Einbaurichtung (5) ein schuhartiges Befestigungsteil der Haltefeder (2') aufschiebbar ist.

6. Befestigungseinrichtung nach Anspruch 5, **dadurch gekennzeichnet, daß** das schuhartige Befestigungsteil eine sich in Einbaurichtung (5) erstreckende Aufnahmeöffnung (15) aufweist, deren Querschnitt etwa dem Querschnitt der Zunge (14) entspricht.

7. Befestigungseinrichtung nach Anspruch 6, **dadurch gekennzeichnet, daß** die Aufnahmeöffnung (15) die Durchgangsöffnung in einem den in Einbaurichtung (5) gerichteten Endbereich des Befestigungsteils und die Zunge (14) umgreifenden ösenartig Bauteil (16) ist.

8. Befestigungseinrichtung nach Anspruch 7, **dadurch gekennzeichnet, daß** das ösenartige Bauteil (16) einen etwa C-förmigen Querschnitt besitzt.

9. Befestigungseinrichtung einem der Ansprüche 5 bis 8, **dadurch gekennzeichnet, daß** der Rastansatz ein sich etwa entgegen der Einbaurichtung (5) erstreckender, zur Zunge (14) hin geneigter Rastarm (17, 18) ist.

10. Befestigungseinrichtung nach Anspruch 9, **dadurch gekennzeichnet, daß** der Rastarm (17, 18) eine Ausklinkung des Endbereichs des Befestigungsteils ist.

11. Befestigungseinrichtung nach einem der vorhergehenden Ansprüche, **dadurch gekennzeichnet, daß** die Haltefeder (2, 2') einen oder mehrere entgegen der Einbaurichtung (5) des Einbaugerätes in einem flachen Winkel von der Seitenwand (1) weggerichtete Klemmhaken (11) besitzt.

12. Befestigungseinrichtung nach Anspruch 11, **dadurch gekennzeichnet, daß** die Klemmhaken (11) an den freien Enden von sich entgegen der Einbaurichtung (5) des Einbaugerätes erstreckenden Klemm-Federarmen (10) angeordnet sind.

13. Befestigungseinrichtung nach einem der vorhergehenden Ansprüche, **dadurch gekennzeichnet, daß** die Haltefeder (2, 2') an ihrem entgegen der Einbaurichtung (5) des Einbaugerätes gerichteten Ende einen von der Seitenwand (1, 1') insbesondere rechtwinklig wegragenden Anschlag (15) besitzt.

14. Befestigungseinrichtung nach einem der vorhergehenden Ansprüche, **dadurch gekennzeichnet, daß** die Haltefeder (2, 2') ein Stanz-/Biegeteil aus einen Blech ist, das die Rastansätze (8, 13) und/oder den Federarm (9) und/oder die Klemmhaken (11) und/oder die Klemm-Federarme (10) und/oder die Anschläge (15) aufweist.

15. Befestigungseinrichtung nach einem der vorhergehenden Ansprüche, **dadurch gekennzeichnet, daß** das Einbaugerät ein Multimediagerät, insbesondere ein Radiogerät ist.

## Claims

1. Fixing device for a built-in unit in a mounting aperture in a motor vehicle, having at least one retaining spring, which can be fastened to a side wall of a housing for the built-in unit and which protrudes at least partially from the housing transversely to the fitting direction of the built-in unit, said spring being flexible in the direction of the housing and arrestable in one of a plurality of positions along the side wall in the fitting direction of the built-in unit, **characterized in that** the side wall (1, 1') has at least one row of multiple arresting apertures (4, 4', 4", 4''', 4'''') of identical cross-section arranged in series in the fitting direction 5 of the built-in unit and the retaining spring (2, 2') has at least one detent projection (8, 13) capable of engaging in the arresting apertures (4, 4', 4'', 4''', 4'''').

2. Fixing device according to Claim 1, **characterized in that** the side wall (1) has at least one slit-like through-opening (6) extending in the fitting direction (5) of the built-in unit, and at least one spring arm (9), extending in the fitting direction (5) of the built-in unit and connected by one end to the retaining spring (2), said arm being insertable through the through-opening (6) and with its free end area bearing under pre-tension against the side wall (1).

3. Fixing device according to either of the preceding Claims, **characterized in that** the slit-like through-opening (6) is arranged between the alignments of two rows of arresting apertures (4, 4'').

4. Fixing device according to any one of the preceding Claims, **characterized in that** one row of arresting apertures (4') extends in approximate continuation of the slit-like through-opening (6).

5. Fixing device according to Claim 1, **characterized in that** the side wall (1') has at least one tongue (14) extending freely counter to the fitting direction (5), in which the arresting apertures (4''', 4'''') are formed and onto which a shoe-like fixing part of the retaining spring (2') can be pushed in the fitting direction (5).

6. Fixing device according to Claim 5, **characterized in that** the shoe-like fixing part has a mounting aperture (15) extending in the fitting direction (5), the cross-section of which corresponds approximately to the cross-section of the tongue (14).

7. Fixing device according to Claim 6, **characterized in that** the mounting aperture (15) is the through-opening in a lug-like component (16) embracing the end area of the fixing part, pointing in the fitting direction (5), and the tongue (14).

8. Fixing device according to Claim 7, **characterized in that** the lug-like component (16) has an approximately C-shaped cross-section.

9. Fixing device according to any one of Claims 5 to 8, **characterized in that** the detent projection is a catch arm (17, 18) extending approximately counter to the fitting direction (5) and inclined towards the tongue (14).

10. Fixing device according to Claim 9, **characterized in that** the catch arm (17, 18) is a notched part of the end area of the fixing part.

11. Fixing device according to any one of the preceding Claims, **characterized in that** the retaining spring (2, 2') has one or more locking hooks (11) pointing counter to the fitting direction (5) of the built-in unit and at a shallow angle away from the side wall (1).

12. Fixing device according to Claim 11, **characterized in that** the locking hooks (11) are arranged at the free ends of locking spring arms (10) extending counter to the fitting direction (5) of the built-in unit.

13. Fixing device according to any one of the preceding Claims, **characterized in that** the retaining spring (2, 2'), at its end pointing counter to the fitting direction (5) of the built-in unit, has a stop (15) projecting from the side wall (1, 1'), especially at right angles.

14. Fixing device according to any one of the preceding Claims, **characterized in that** the retaining spring (2, 2') is a punched/bent sheet metal part comprising the detent projections (8, 13) and/or the spring arm (9) and/or the locking hooks (11) and/or the locking spring arms (10) and/or the stops (15).

15. Fixing device according to any one of the preceding Claims, **characterized in that** the built-in unit is a multimedia unit, in particular a radio.

## Revendications

1. Dispositif pour la fixation d'un appareil à encastrer dans un logement dans un véhicule automobile, comportant au moins un ressort de retenue à installer sur une paroi latérale d'un boîtier de l'appareil à encastrer, où le ressort de retenue fait au moins partiellement saillie hors du boîtier perpendiculairement à la direction d'encastrement de l'appareil à encastrer, tout en étant déformable dans la direction du boîtier, et peut être verrouillé sur la paroi latérale à l'une de plusieurs positions le long de la direction d'encastrement de l'appareil à encastrer, **caractérisé par le fait que** la paroi latérale (1, 1') a au moins une série de plusieurs ouvertures d'arrêt (4, 4', 4", 4'", 4"") ayant toutes la même format et disposées l'une derrière l'autre dans la direction d'encastrement (5) de l'appareil à encastrer et que le ressort de retenue (2, 2') comporte au moins un taquet d'enclenchement (8, 13) pouvant s'encliqueter dans les ouvertures d'arrêt (4, 4', 4", 4'", 4"").

2. Dispositif de fixation selon la revendication 1, **caractérisé par le fait que** la paroi latérale (1) comporte, au moins, une ouverture de traversée (6) ressemblant à une entaille s'étendant dans la direction d'encastrement (5) de l'appareil à encastrer, ainsi que, au moins, une branche de ressort (9) s'étendant dans la direction d'encastrement (5) de l'appareil à encastrer et reliée par une extrémité au ressort de retenue (2), la branche de ressort pouvant s'engager à travers l'ouverture de traversée (6) et pouvant s'appliquer, par sa partie terminale libre et sous une force de précontrainte, sur la paroi latérale (1).

3. Dispositif de fixation selon l'une des revendications précédentes, **caractérisé par le fait que** l'ouverture de traversée (6) ressemblant à une entaille est disposée entre les directions d'alignement de deux rangées d'ouvertures d'arrêt (4, 4").

4. Dispositif de fixation selon l'une des revendications précédentes, **caractérisé par le fait qu'**une rangée d'ouvertures d'arrêt (4') s'étend approximativement dans le prolongement de l'ouverture de traversée (6) ressemblant à une entaille.

5. Dispositif de fixation selon la revendication 1, **caractérisé par le fait que** la paroi latérale (1') comporte au moins une languette (14) s'étendant librement dans le sens opposé à la direction d'encastrement (5), dans laquelle sont ménagées les ouvertures d'arrêt (4'", 4"") et sur laquelle on peut glisser, dans la direction d'encastrement (5) une pièce de fixation, ressemblant à un sabot, du ressort de retenue (2').

6. Dispositif de fixation selon la revendication 5, **caractérisé par le fait que** la pièce de fixation ressemblant à un sabot comporte une découpe (15) s'étendant dans la direction d'encastrement (5), dont la section transversale correspond approximativement à la section transversale de la languette (14).

7. Dispositif de fixation selon la revendication 6, **caractérisé par le fait que** la découpe (15) est l'ouverture de traversée dans une partie terminale de la pièce de fixation dirigée dans la direction d'encastrement (5) et la pièce (16) ressemblant à un oeillet entourant la languette (14).

8. Dispositif de fixation selon la revendication 7, **caractérisé par le fait que** la pièce (16) ressemblant à un oeillet a une section transversale approximativement en forme de C.

9. Dispositif de fixation selon l'une des revendications 5 à 8, **caractérisé par le fait que** le taquet d'enclenchement est une branche d'arrêt (17, 18) s'étendant dans le sens opposé à la direction d'encastrement (5) et oblique vers la languette (14).

10. Dispositif de fixation selon la revendication 9, **caractérisé par le fait que** la branche d'arrêt (17, 18) est un bec de mortaise de la partie terminale de la pièce de fixation.

11. Dispositif de fixation selon l'une des revendications précédentes, **caractérisé par le fait que** le ressort de retenue (2, 2') a un ou plusieurs crochets de blocage (11) dirigés à l'opposé de la direction d'encastrement (5) de l'appareil à encastrer et s'écartant sous un angle plat de la paroi latérale (1).

12. Dispositif de fixation selon la revendication 11, **caractérisé par le fait que** les crochets de blocage (11) sont disposés aux extrémités libres de branches de ressort bloquantes (10) s'étendant dans le sens opposé à la direction d'encastrement (5) de l'appareil à encastrer.

13. Dispositif de fixation selon l'une des revendications précédentes, **caractérisé par le fait que** le ressort de retenue (2, 2') a, sur son extrémité dirigée à l'opposé de la direction d'encastrement (5) de l'appareil à encastrer, une butée (15) faisant saillie en s'écartant de la paroi latérale (1, 1'), notamment, à angle droit.

14. Dispositif de fixation selon l'une des revendications précédentes, **caractérisé par le fait que** le ressort de retenue (2, 2') est une pièce en tôle estampée et pliée, qui comporte les taquets d'enclenchement (8, 13) et/ou la branche de ressort (9) et / ou les crochets d'arrêt (11) et/ou les branches de ressort bloquantes (10) et/ou les butées (15).

15. Dispositif de fixation selon l'une des revendications précédentes, **caractérisé par le fait que** l'appareil à encastrer est un appareil multimédia et notamment, un poste radio.
